# EUROPEAN PATENT SPECIFICATION

(11) **EP 3 833 564 B1**
(45) Date of publication and mention of the grant of the patent: **29.06.2022**
(21) Application number: 19759760.2
(22) Date of filing: 06.08.2019
(51) Int. Cl.: B60J 1/00, C03C 17/32

(54) **METHODS OF REINFORCING OPENINGS IN GLASS AND PRODUCTS FORMED THEREFROM**
VERFAHREN ZUR VERSTÄRKUNG VON ÖFFNUNGEN IN GLAS UND DARAUS HERGESTELLTE PRODUKTE
PROCÉDÉS DE RENFORCEMENT D'OUVERTURES DANS DU VERRE ET PRODUITS FORMÉS À PARTIR DE CEUX-CI

(30) Priority: 07.08.2018 US 201862715496 P; 23.01.2019 US 201962795713 P
(43) Date of publication of application: 16.06.2021
(73) Proprietor: Central Glass Company, Limited, Ube-shi, Yamaguchi 755-0001 (JP)
(72) Inventor: BRONSTEIN Wladislaw, L6776 Grevenmacher (LU); SABRA Issam, L6776 Grevenmacher (LU); COLLI Frederic, L6776 Grevenmacher (LU); BARD Michael, Nashville, Tennessee 37209 (US)
(74) Representative: Mewburn Ellis LLP
(86) International application number: PCT/JP2019/030981
(87) International publication number: WO 2020/032059

(56) References cited:
- WO-A1-2004/011755
- CO-A1- 2017 007 445
- US-A1- 2014 234 576

## Description

### Cross References To Related Applications

This application claims benefit under 35 U.S.C. §1.119(b) in U.S., or similar statues in other countries, of U.S. provisional patent application Ser. No. 62/715,496, filed August 07, 2018, entitled METHODS OF REINFORCING OPENINGS IN GLASS AND PRODUCTS FORMED THEREFROM, and also of U.S. provisional patent application Ser. No. 62/795,713, filed January 23, 2019 entitled METHODS OF REINFORCING OPENINGS IN GLASS AND PRODUCTS FORMED THEREFROM.

### Technical Field

The present disclosure is generally directed to a glass product having an opening therethrough which exhibits compressive forces at the opening.

### Background Art

Glass may break under certain tensile stress. Where a glass sheet or laminated glass has an opening cut there through, the glass may be weakened. The weakened glass may break more easily and may not hold up to high tensile stress. A sheet of glass having an opening may undergo tempering to provide a strengthened glass sheet. Tempering glass is a thermal or chemical process that provides a strengthened glass sheet having permanent residual internal tension and surface compression. Any openings formed in the glass or shaping of the glass is done prior to thermal tempering as the thermally tempered glass may not be cut after the tempering process. Tempered glass is difficult to break due to the permanent residual surface compression, however, damage to any part the glass may lead to damage of the entire glass sheet.

Laminated glass materials may provide more impact protection in a glass material and have various functions. Multiple glass sheets may be combined using various functional intermediate materials. The intermediate materials may function to provide reflective or absorption benefits to the glass laminates or provide switchable functionality. Laminated glass may be desirable over tempered glass where impact is anticipated. The laminate may include at least two glass sheets having an intermediate layer between the glass sheets. The intermediate layer may include, without limitation, a polymer sheet, including polyvinyl butyral (PVB), ethylene vinyl acetate (EVA), or polyethylene terephthalate (PET), or ionomer materials.

The document CO 2017 007 445 A1 describes an automotive laminate with an opening and a reinforcement around the opening of the hole to improve the durability of the glass around the hole. The document WO 2004/011755 A1 describes an attachment system in a glazing.

Providing an opening in a glass sheet or laminated glass sheet may be desirable for various vehicle and architectural applications. However, forming a hole in a glass sheet weakens the glass at the opening. It is not always desirable or possible to temper glass for various applications. Therefore, it is desirable to provide a laminated glass material which may support an opening therethrough.

### Summary of the Disclosure

The present invention is directed to a glass product as defined in independent claim 1 and a method of forming compressive stress at an opening in a glazing as defined in independent claim 12.

In some embodiments, the glazing comprises a first glass sheet, a second glass sheet facing the first glass sheet, and an intermediate layer formed between the first glass sheet and the second glass sheet. The thickness of at least one of the first glass sheet and the second glass sheet is preferably chosen from 0.1 to 12 mm, and the thickness of at least one of the first glass sheet and the second glass sheet is more preferably chosen from 0.3 to 5.0 mm and even more preferably from 0.4 to 2.3 mm.

In further embodiments, the bushing is subject to tension. The bushing may have a diameter less than an original diameter of the opening. The adhesive may be thermally, chemically, or ultraviolet radiation cured. The bushing may be made of a metal or metal alloy, and preferably may be aluminum or its alloy.

In further embodiments, the bushing comprises a flange and a body, wherein the flange extends outside of the opening against an outer surface of the glazing and the body of the bushing extends through the opening.

Further embodiments include an edge of the opening which has a roughness (Ra) of less than 2.5 µm. In further embodiments, a seal may be provided at the opening, and may be attached to the bushing. In certain embodiments, the glass product may include a second bushing.

### Brief Description of Drawings

The accompanying drawings, which are incorporated into and constitute a part of this specification, illustrate one or more example aspects of the present disclosure and, together with the detailed description, serve to explain their principles and implementations.
[fig.1]Fig.1 shows a glass product with an opening.
[fig.2]Fig. 2 shows an exemplary glass product with an opening having an adhesive and a bushing therein.
[fig.3]Fig. 3 shows an opening having an adhesive and a bushing where the opening is under compressive stress, according to an exemplary embodiment of the present disclosure.
[fig.4]Fig. 4 shows an end view of a bushing with a flange, according to an exemplary embodiment of the present disclosure.
[fig.5]Fig. 5 shows a side view of the bushing with the flange shown in Fig. 4.
[fig.6]Fig. 6 shows a cross section at an opening of a glass product in an expanded state.
[fig.7]Fig. 7 shows a cross section at an opening of a glass product in a contracted state, according to an exemplary embodiment of the present disclosure.
[fig.8]Fig. 8 shows a cross section at an opening of a glass product according to another exemplary embodiment of the present disclosure.
[fig.9]Fig. 9 shows a glass product according to yet another exemplary embodiment of the present disclosure.
[fig.10]Fig. 10 shows a glass product according to a further exemplary embodiment of the present disclosure.
[fig.11]Fig. 11 shows a glass sheet having an aluminum bushing and an adhesive within an opening in the glass.
[fig.12]Fig. 12 shows a piece of glass having an opening under compressive stress in front of a polarization wall.
[fig.13]Fig. 13 shows a piece of glass having an opening under compressive stress in front of a polarization wall.
[fig.14a]Fig. 14a shows measurements of the glass opening in flat glass with a stress meter having a bushing for reinforcement of the glass opening.
[fig.14b]Fig. 14b shows measurements of the glass opening in flat glass with a stress meter having a bushing for reinforcement of the glass opening.
[fig.15a]Fig. 15a shows measurements of a glass opening in bent glass with a stress meter prior to reinforcement of the glass opening.
[fig.15b]Fig. 15b shows measurements of a glass opening in bent glass with a stress meter prior to reinforcement of the glass opening.
[fig.16a]Fig. 16a shows measurements of a glass opening in bent glass with a stress meter having a bushing for reinforcement of the glass opening.
[fig.16b]Fig. 16b shows measurements of a glass opening in bent glass with a stress meter having a bushing for reinforcement of the glass opening.
[fig.17]Fig. 17 is a cross section showing a glass opening in a glass product with a wiper device according to yet another exemplary embodiment of the present disclosure.
[fig.18]Fig. 18 is a cross section showing a glass opening in a glass product according to a further exemplary embodiment of the present disclosure.
[fig.19]Fig. 19 is a cross section showing a glass opening in a glass product according to a yet another exemplary embodiment of the present disclosure.
[fig.20]Fig. 20 is a cross section showing a glass opening in a glass product according to a further exemplary embodiment of the present disclosure.
[fig.21]Fig. 21 illustrates a manufacturing process for a glass product with a reinforced opening according to an exemplary embodiment of the present disclosure.
[fig.22]Fig. 22 illustrates a manufacturing process for a glass product with a reinforced opening according to another exemplary embodiment of the present disclosure.

### Detailed Description

Disclosed herein is a glass product having compressive stress which strengthens an opening through at least part of the glass product and a method of making such a glass product. In the following description, for purposes of explanation, specific details are set forth in order to promote a thorough understanding of one or more aspects of the disclosure. It may be evident in some or all instances, however, that any aspect described below can be practiced without adopting the specific design details described below.

Creating an opening within a glass sheet may weaken the glass around the opening, which may lead to cracks in the glass. Mechanical stress may further create a risk of fractures in the glass where a mechanical feature is moved through or within the glass opening. Openings in glass may be desirable for various applications, including, but not limited to, a hole for the placement of a wiper in an automotive window, openings for attaching a side window within a vehicle door, openings for an antenna or camera, openings for the attachment of luggage rails on a sunroof, an opening for placing a handle in a glass door, and connecting electrical devices, including those within a glass laminate. Therefore, there is a need to strengthen glass products having an opening therethrough.

Compressive stress may be introduced to a glass sheet to improve the glass strength. Described herein are glass products having a strengthened opening therethrough and methods for introducing compressive stress to an opening in the glass products. As used herein, "glass product" may include a glazing and any other assembled parts. A glazing may include a single glass sheet or multiple glass sheets which are laminated together. The glazing may include, for example, a first glass sheet, a second glass sheet facing the first glass sheet, and an intermediate layer formed between the first glass sheet and the second glass sheet. Materials of the glass product may be any inorganic and organic glasses, including but not limited to, soda-lime silica glass, alumino silicate glass, boro-silicate glass, silica glass, and acrylic glass. The glass used in such products may be any thickness. Preferably, openings in glass sheets from 0.1 to 12 mm thick may be strengthened with the disclosed methods. More preferably, the glass sheets are from 0.3 to 5.0 mm and even more preferably from 0.4 to 2.3 mm thick. In a laminated glass product having more than one glass sheet, the glass sheets may have the same or different thicknesses. Glass sheets having a reinforced opening as disclosed herein may be flat or bent. Further, the glass sheets having the reinforced opening may include tempered glass or non-tempered glass, where additional reinforcement may be desired. In some embodiments, the reinforced opening may be formed prior to tempering the glass.

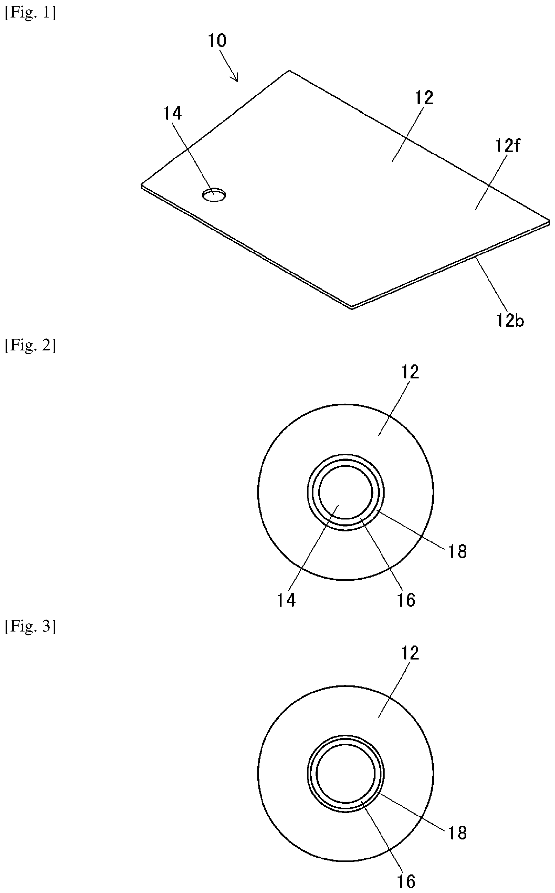

A glass product 10 for use in a vehicle is illustrated in FIG. 1. The glass product 10 includes an opening 14 that extends through a glazing 12. The opening 14 near the bottom of the glazing 12 may be used for a wiper mechanism which may extend through the opening 14. An opening 14 may be formed in any suitable position(s) in the glazing 12, including for additional uses, such as luggage racks and handles. Further some glazings 12 may include more than one opening 14. The opening 14 may be formed by various methods known, including, but not limited to, mechanical drilling, water jet drilling, chemical etching, and laser drilling. Openings in the glazing 12 may be various sizes and shapes, including, but not limited to, circular or oval.

The edge of the opening 14 may be formed to provide a minimum roughness at the opening edge. Less surface roughness at the opening 14 may improve resistance to form cracks in the glass. A rough edge may include stress concentrations which may lead to breaks in the glass. A smoother (less rough) edge reduces the stress concentrations and may improve resistance to cracks. The opening edge may have a roughness (Ra) preferably less than 2.5 µm, more preferably less than 2 µm, or even more preferably less than 1.5 µm. The surface roughness may be measured according to ISO standard 13565-1 (1996) at a cut-off wavelength λc is 2.5 µm and λs is 2.5 µm. Chemical etching or laser drilling methods of forming the opening may be preferable to minimize the opening edge roughness. Mechanical drilling may also create a smooth opening, with or without additional finishing, such as polishing. The edge of the opening 14 includes the inner surface of the opening between a first face 12f of the glazing 12 and a second face 12b of the glazing 12 where the opening 14 is formed through the glass product 10.

FIG. 2 illustrates the glazing 12 having the opening 14 with a bushing 16 and an adhesive 18 within the opening 14. A bushing 16 used may be any material that may expand and then decrease in size, or namely, may be provided to expand and contract. The bushing 16 has an original diameter that is less than the original diameter of the opening 14, wherein the "original diameter of the bushing" is the outer diameter of the bushing prior to expansion. The "original diameter of the adhesive" is the outer diameter of the adhesive 18 prior to expansion and curing. The "original diameter of the opening" is the diameter of the opening 14 when it is cut into the glass, prior to reinforcement. In some embodiments, the adhesive 18 may have a thickness less than one half of the difference in diameter between the bushing 16 and the opening 14.

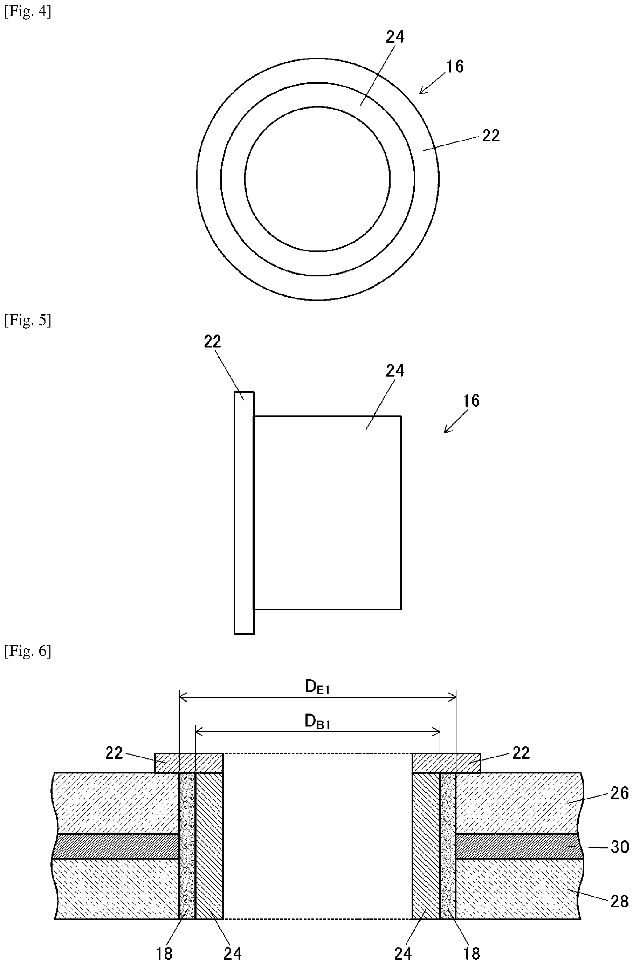

In certain embodiments, the bushing 16 may include a flange 22 which extends out of the opening 14 and along the glazing 12 when the bushing 16 is in place in the opening 14. FIG. 4 shows the bushing 16 with a flange 22 when viewed from a bottom end of the bushing 16 and FIG. 5 shows the bushing 16 with a flange 22 when viewed from a side. The bushing 16 may include a flange 22 which extends along at the outer surface of the first glass sheet or the outer surface of the second glass sheet when the bushing 16 is placed within the opening 14. An outer circumference of the flange 22 may be greater than the outer circumference of a bushing body portion 24 which extends through the opening 14 formed in the glazing 12 and greater than the circumference of the opening 14. The flange 22 may aid in the alignment of the bushing 16 within the opening 14 prior to curing the adhesive 18. The thickness of the bushing 16 may depend on the bushing material. A weaker material may require a thicker bushing 16, while a stronger material may allow for a thinner bushing 16. A sufficient strength is required to maintain the compressive force in the glazing 12 at the opening 14. The bushing 16 may be various materials, including, but not limited to, metal or plastic. Metals which may be used include, but are not limited to, aluminum, copper, steel, tin, zinc, lead, titanium, and iron. In further embodiments, the bushing 16 may be made of an alloy of any suitable metal(s), including aluminum, copper, steel, tin, etc. The bushing 16 material may be selected for a particular Young's modulus and/or thermal expansion coefficient based on the glass sheet material(s) and the adhesive 18 used. In certain embodiments, the bushing 16 may be formed in a ring or cylindrical shape. Preferably, the bushing 16 may have a shape which is complementary to the shape of the opening 14. Further, a bushing 16 may include a narrow slit or slits substantially extending in a thickness direction or oblique directions of the glazing, which may aid expansion and contraction. Furthermore, in some embodiments, a bushing may be made of multiple body parts connected to each other. In certain embodiments, there may be more than one bushing 16 within the opening 14. For example, bushings 16 may be placed through the opening 14 from opposite sides of the glazing 12.

The methods described herein for introducing a compressive stress to the opening 14 in the glazing 12 may be used in any glass products, including, but not limited to, glazings which are individual glass sheets or glass laminates. Where more than one glass sheet is used in a glass laminate, the opening may be cut in the glass sheet(s) before or after lamination. Further, the opening 14 may be formed through flat glass or bent glass. In some embodiments including a laminated glazing 12, where the opening 14 is formed prior to lamination, the opening 14 may be cut into stacked glass sheets or the glass sheet openings may be cut into each glass sheet separately. Where the opening 14 is cut into glass sheets separately, prior to lamination, the opening cuts may not align completely. A bushing 16 may be used on each side of a laminated glass product to provide compressive strength to each glass sheet in the laminate separately, i.e. more than one bushing 16 may be used in an opening 14. In further embodiments, the opening 14 may be formed in an already laminated glazing 12. In a laminated glazing 12, the opening 14 may be used with one or multiple bushings 16.

FIG. 3 shows an opening 14 having a compressive stress formed by an adhesive 18 provided between the opening 14 and a bushing 16. In some embodiments, the bushing 16 may expand with the adhesive 18 placed between the bushing 16 and the opening 14 to adhere the bushing 16 to the opening 14. The method used to expand the bushing may include, but is not limited to, thermal and/or mechanical forces. In the case of a thermally expanded bushing 16, the bushing 16 may have a thermal expansion coefficient larger than the glazing 12. Thus, upon heating, the bushing 16 may expand at a higher rate than the glazing 12, and the outer edge of the bushing 16 within the opening 14 may be adhered to the edge of the opening 14 in an expanded state. Thermal treatment may be applied to the entire glazing 12 or local to the bushing 16. The bushing 16 may be substantially the same shape as the opening such that the bushing 16 may be adhered to the entire edge of the opening 14 in an expanded state. It may be preferable in some embodiments to form a uniform adhesion around the edge of the opening 14 such that in a contracted state, there may be even compression in the glazing around the opening. Preferably, the adhesive 18 provided between the bushing 16 and the opening 14 is thermally cured while the bushing 16 is in an expanded state. The bushing 16 may then be cooled, and the bushing 16 may decrease in size to a contracted state. The bushing 16 may remain attached to the opening edge, forming a compressive stress in the glazing around the opening 14. The glazing 12 is thus strengthened at the opening 14. The adhesive 18 may be compressed between the edge of the opening 14 and the bushing 16 when the bushing 16 is in an expanded state. In some embodiments, as shown in FIG. 3, the adhesive 18 may remain compressed after the bushing 16 is in a contracted state. The temperature difference between a heated state and a cooled state is not limited and may be more than or equal to 50 K, 80 K, or 100 K. The difference in temperature may depend on the thermal expansion coefficient and Young's modulus of the bushing and the glass and desired compressive stress to be formed.

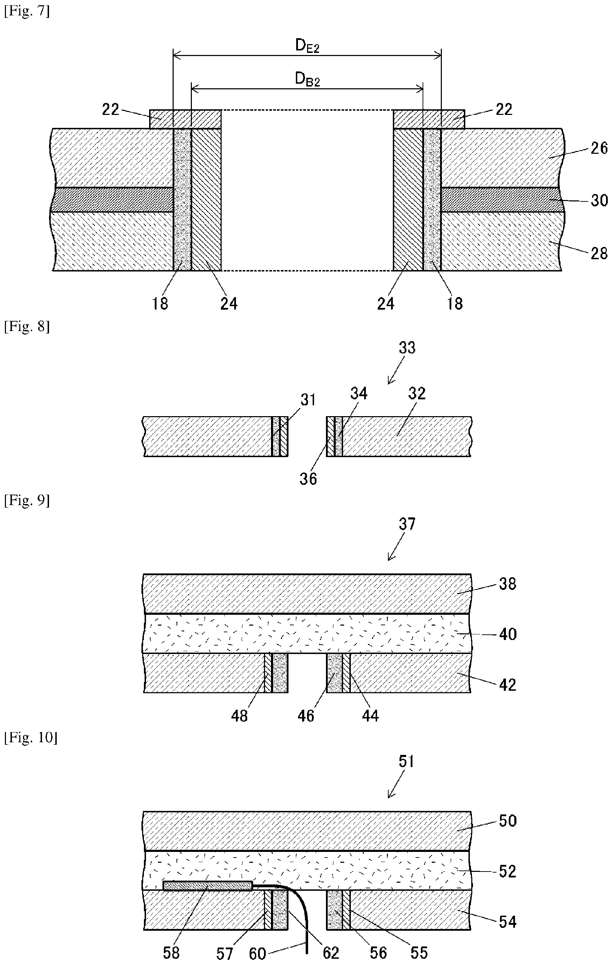

FIG. 6 and FIG. 7 cross-sectionally illustrate the opening 14 formed in the glazing 12 and its vicinities, where FIG. 6 shows the bushing 16 in an expanded state, and FIG. 7 shows the bushing 16 in a contracted state. In FIGS. 6 and 7, the glazing 12 is formed of a first glass sheet 26, a second glass sheet 28 facing the first glass sheet 26, and an intermediate layer 30 formed between the first glass sheet 26 and the second glass sheet 28. The intermediate layer 30 may be made of any suitable material, including a polymer sheet, such as polyvinyl butyral (PVB), ethylene vinyl acetate (EVA), or polyethylene terephthalate (PET), or ionomer materials. As shown in FIGS. 6 and 7, the bushing 16 shown has a flange 22 extending over the first surface of the first glass sheet 26 from the edge of the opening 14. In some embodiments, the flange may be placed to extend over the outer surface of the second glass sheet. In the expanded state, as shown in FIG. 6, the bushing 16 has an outer diameter D_{B1} whereas the opening 14 has an inner diameter D_{E1}, To reach an expanded state, in some embodiments, the bushing 16 may be heated or mechanically expanded to increase the outer diameter D_{B1} to be larger in size, so that the outer diameter D_{B1} becomes larger than the original outer diameter of the bushing 16. Where the bushing 16 is in an expanded state, the inner diameter D_{E1} of the opening 14 may, in some embodiments, be larger than the original inner diameter of the opening 14. The inner diameter D_{E1} of the opening 14 may be the same or larger than the original inner diameter of the opening 14 when the bushing 16 is in an expanded state. Where the inner diameter D_{E1} of the is larger than the original inner diameter of the opening 14, the bushing 16 has a larger expansion ratio than the glazing 12 forming the opening 14. In the expanded state, the adhesive 18 receives compressive force from the outer peripheral wall, or the outer circumference, of the bushing body portion 24.

Prior to removal of the application of heat or mechanical force, the adhesive 18 placed between the bushing 16 and the edge of the opening 14 may be cured adequately by heating, ultraviolet (UV) radiation, or any other suitable means. After the adhesive 18 is cured, the heat or mechanical force used to expand the bushing 16 may be removed. Upon removal of the heat or mechanical force, the bushing 16 may gradually reduce in size to have a smaller outer diameter D_{B2}, and the opening 14 in the glazing 12 may reduce in size to have an inner diameter D_{E2}. The outer diameter D_{B2} of the bushing 16 in the contracted state is smaller than the outer diameter D_{B1} of the bushing 16 in the expanded state. The inner diameter D_{E2} of the opening 14 in the contracted state is smaller than the inner diameter D_{E1} of the opening 14 in the expanded state. Because the bushing 16 shrinks after the adhesive 18 is cured, the adhesive 18 is pulled inwardly in the radial direction of the opening 14, so that the edge of the opening 14 receives force pulled inward, thereby forming compressive stress in the glass around the opening 14. The adhesive 18 may also decrease in size (based on an inner diameter of the adhesive 18) upon curing and removal of the heat or mechanical force. Preferably the adhesive 18 has a thermal expansion coefficient greater than or equal to the thermal expansion coefficient of the bushing 16. The adhesive 18 may include, but is not limited to, an epoxy or polyurethane. The adhesive 18 used may have an Young's modulus similar to that of the bushing 16. The adhesive 18 may have sufficient strength to maintain the compressive stress in the glass by keeping the opening edge adhered to the bushing 16 after the bushing 16 decreases in size.

In some embodiments, where the bushing 16 is thermally expanded and the adhesive is thermally cured, the bushing 16 expansion and adhesive 18 curing may be done in an autoclave. The autoclave may be used in preparation of a glass laminate, which can be done at the same time as the thermal bushing 16 expansion and adhesive 18 curing where the glazing 12 is a laminated glazing. In further embodiments, thermal expansion and/or curing may also be induced by applying heat directed at the bushing 16 and/or adhesive 18.

FIG. 8 to FIG. 10 illustrate further embodiments of the glass products according to aspects of the present disclosure. FIG. 8 shows a glass product 33 having a single glass sheet 32 as a glazing. The glass sheet 32 may have a cylindrical shaped opening 31 into which a cylindrical bushing 36 may be inserted. An adhesive 34 may be placed between the outer periphery of the bushing 36 and the inner periphery of the opening 31. The adhesive 34 may be placed on the outer perimeter of the bushing 36 prior to placing the bushing 36 in the opening 31. In some embodiments, the adhesive 34 may be placed around the edge of the opening 31 prior to placement of the bushing 36 within the opening 31. The bushing 36 may be expanded and then contracted to produce compressive stress in the glass around the opening edge of the single glass sheet 32. Because the compressive stress is formed in the glass around the opening edge of the single glass sheet 32, the glass product 33 may have a durable structure, particularly around the edge of the opening 31.

FIG.9 shows another embodiment including a glass product 37 with a glazing made of a first glass sheet 38, a second glass sheet 42 facing the first glass sheet 38, and an intermediate layer 40 formed between the first glass sheet 38 and the second glass sheet 42. An opening 44 may be formed through the second glass sheet 42, such that the opening 44 does not extend through the first glass sheet 38. In certain embodiments, the intermediate layer 40 may also remain without an opening or hole. It may be preferable that the opening 44 be formed in the second glass sheet 42 prior to lamination of the first glass sheet 38 and the second glass sheet 42. A bushing 46 may be arranged within the opening 44, and an adhesive 48 may be provided between the outer periphery of the bushing 46 and the inner periphery of the opening 44. The bushing 46 may be expanded and then contracted to produce compressive stress in the glass around the opening edge of the second glass sheet 42. Because the bushing 46 diameter is reduced, the circumference of the opening in the second glass sheet 42 attached to the bushing 46 by adhesive 48 is reduced, compressing the glass at the edge of the opening. Accordingly, the second glass sheet 42 is structured with added strength around the opening 44 due to the compression.

FIG. 10 further shows an embodiment of a glass product 51 having substantially the same glass structure as that of the glass product 37 shown in FIG. 9. The glass product 51 may include a glazing including a first glass sheet 50, a second glass sheet 54 facing the first glass sheet 50, and an intermediate layer 52 formed between the first glass sheet 50 and the second glass sheet 54. An opening 55 may be formed through the second glass sheet 54, such that the opening 55 does not extend through the first glass sheet 50. The intermediate layer 52 may include an opening aligned with the opening 55 in the second glass sheet 54, or in certain embodiments, the intermediate layer 52 may remain without an opening. A bushing 56 may be arranged within the opening 55 and an adhesive 57 may be provided between the outer periphery of the bushing 56 and the inner periphery of the opening 55. As shown in FIG. 10, an electronic connector 58 may be provided within the glass product 51. An electronic connector 58 may be used to provide power to various features, such as, e.g., an organic light emitting device, including an electronic display, a coating, or a heatable wire, including for defrosting a wiper park area. The electronic connection 58 may include a connector, such as a wire or cable 60 which may be connected to a power source and may extend out of the opening 55 through an inner circumference of the bushing 62. The electronic device 58 and the cable 60 may exert force to the glass around the bushing 56 due to the thicknesses of the connector, however, the second glass sheet 54 is strengthened by the formation of compressive stress at the opening 55 in the second glass sheet 54, such that the glass product 51 significantly reduces any occurrence of cracking. The electronic connector 58 may be placed between the second glass sheet 54 and the intermediate layer 52 or between the first glass sheet 50 and the intermediate layer 52. Further, the electronic device 58 can be arranged between intermediate layers where two or more intermediate layers are in the laminated glass product. In some embodiments, the electronic connector 58 may be provided within the opening 55. The opening 55 may be any suitable size to provide electrical connection to a power source.

In some embodiments, a mechanical force may be used to expand the bushing 16 within the opening. The mechanical force may be used to expand the bushing 16 towards the edge of the opening 14. The bushing 16 may be flat or have a three dimensional shape along an inner circumference. In certain embodiments, the bushing 16 may include a threaded shape in an inner circumference of the bushing 16 such that mechanical expansion of the bushing 16 may use the threaded shape. The adhesive 18 may be provided as a layer disposed on the outer circumference of the bushing 16 and may expand with the bushing 16 under the mechanical force to an expanded state. In the expanded state, the diameter of the adhesive 18 may be substantially equal to the diameter of the opening. The adhesive 18 may be cured while the bushing 16 is in an expanded state, adhering the bushing 16 to the opening 14. The adhesive 18 in such cases may be by any suitable means, including thermal, chemical, or UV radiation treatment. When the mechanical force is removed, the bushing 16 and the adhesive 18 may decrease in size. The bushing 16 may remain adhered to the edge of the opening 14 which may form compressive stress in the glass at the opening 14. The glass may thus be strengthened at the opening 14. Mechanical expansion of the bushing 16 may be performed within openings in individual glass sheets or laminated glass products.

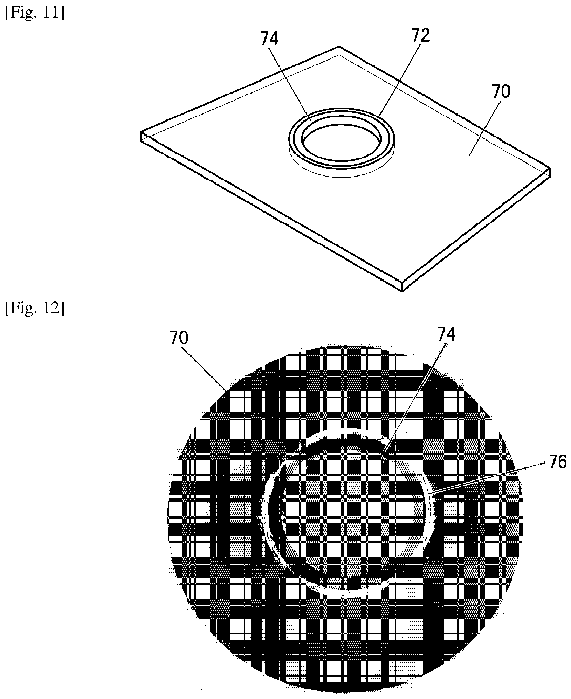

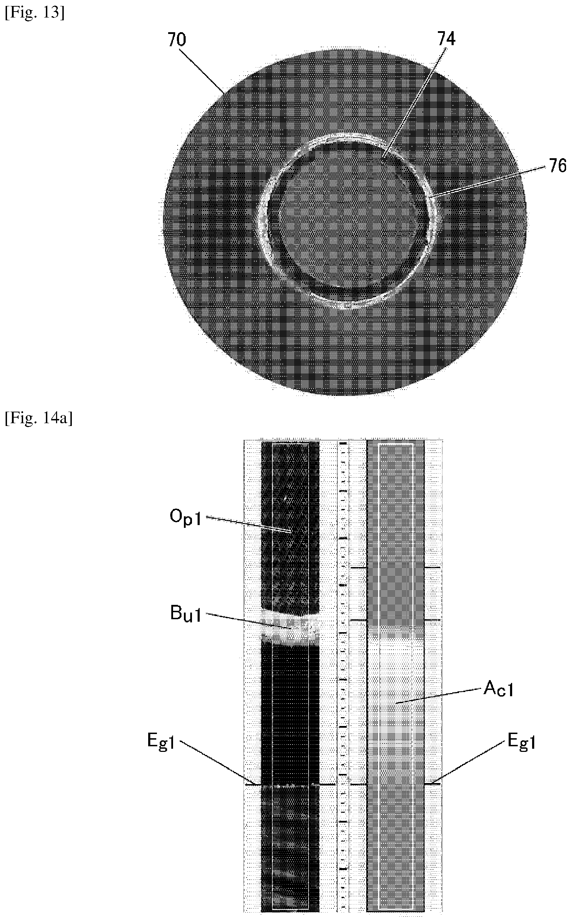

For example, FIG. 11 shows an exemplary embodiment of the present disclosure. Particularly, the example includes a 3.15mm thickness soda-lime silica glass sheet 70 having an opening 72 that is 26.8mm. As disclosed herein, a glass sheet for use as an individual glass sheet or as part of a lamination, may have any suitable thickness. An aluminum bushing 74 having a 25 mm original outer diameter was placed within the glass sheet opening 72. The inner aluminum bushing diameter, as shown in FIG. 11, is 22 mm. The preferable inner diameter of the bushing 74 may depend on the intended use of the opening. The size of the opening 72 and the bushing 74 used therein are not limited and may be any suitable size, which may be large or smaller than the embodiment shown in FIG. 11. A two-component epoxy resin adhesive was placed between the aluminum bushing 74 and the glass opening 72. The glass 70 having the bushing 74 and the adhesive extending around the opening 72 was heated to 140°C. The bushing 74 and adhesive expanded to the diameter of the opening 72 and the adhesive was cured at this temperature. Upon cooling, the bushing 74 reduced in size but remained adhered to the opening 72. FIGS. 12 and 13 illustrate stress at a reinforced opening in glass against a polarization wall after cooling. FIG. 13 shows the glass sheet of FIG. 12 which was rotated 90°, which shows that the compression is present around the entire opening. As shown in FIGS. 12 and 13, the white ring-like portion 76 shows an adhesive formed between the glass opening edge and the bushing 74. A layer of compressive stress was visible in each of FIGS. 12 and 13 around the entire bushing.

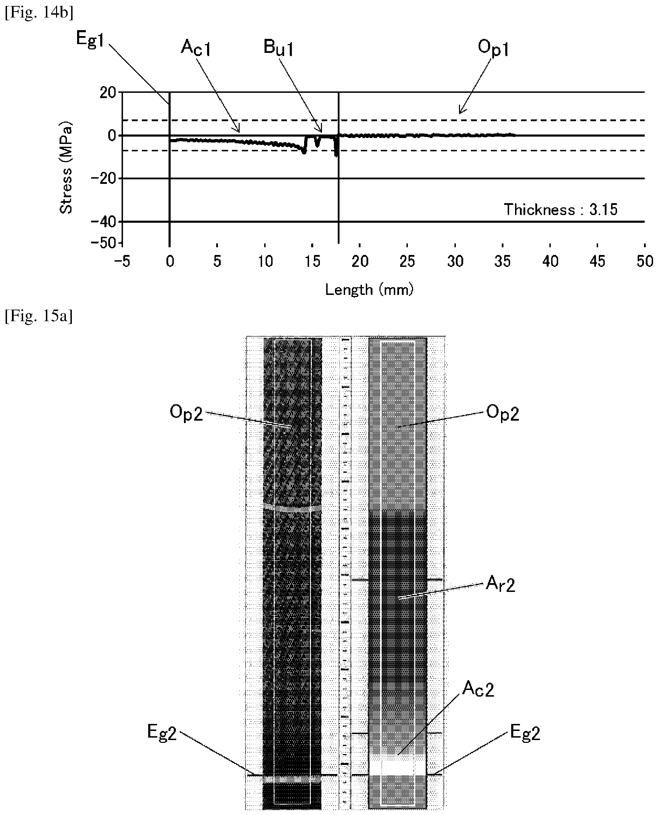

FIGS. 14a, 14b show measurements using a stress meter, EdgeMaster 2 (Stress Photonics, Inc.), to verify the polarization wall findings in a flat glass sheet sample as shown in FIG. 11. The compressive stress was formed along the edge of the opening Op1 as measured by the EdgeMaster 2. Compressive stress was found between the bushing Bu1 and the outer perimeter Eg1 of the glazing. More specifically, as shown in FIG. 14a, a region between the glass outer perimeter Eg1 and the bushing Bu1 was subject to compressive stress, which is indicated as a relatively white area Ac1 in FIG. 14a. This relatively white area Ac1 was shown in FIG. 14b as the area having stress measured below zero just outside of the bushing Bu1. Because the relatively white area Ac1 is formed at the outer circumference of the opening Op1, the glass product is made with higher resistance against cracking around the opening Op1.

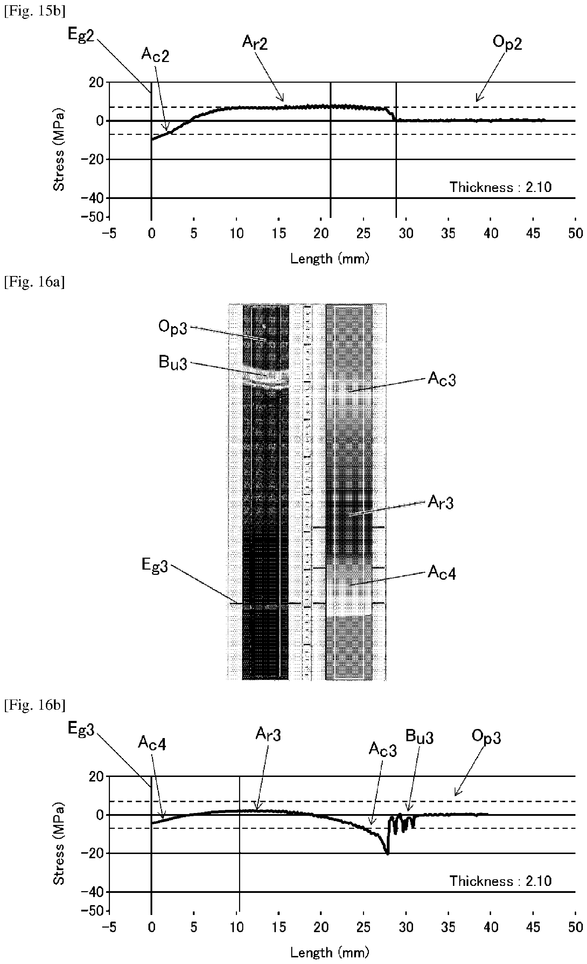

FIGS. 15a, 15b and FIGS. 16a, 16b show another glass product sample which includes a bent glass sheet. FIGS. 15a, 15b includes stress measurements of a bent glass sheet having an opening Op2 without reinforcement and FIGS. 16a, 16b include stress measurements of the bent glass sheet having an opening Op3 after reinforcement with a bushing Bu3 as disclosed herein.

FIGS. 15a, 15b show stress measurements of a bent glass sheet having an opening Op2 cut through the glass sheet without any reinforcement at the opening Op2. Where no reinforcement is made to the glass sheet at an opening, the glass sheet between the opening Op2 edge and the glass outer perimeter Eg2 was subject to tension, as shown in FIG. 15b, where the area Ar2 between the opening Op2 and the glass outer perimeter Eg2 had a measured stress greater than zero. The area Ac2 near the glass outer perimeter Eg2 had slight compression as shown.

After the reinforcement is given to the glass substrate, the stress level was largely changed. FIGS. 16a, 16b show the compressive stress formed with a bushing reinforcement at an opening Op3 in the bent glass. The EdgeMaster 2 stress meter was used to measure the stress at the opening Op3 in the glass sheet. With reinforcement, the glass substrate around the opening Op3 was under compression with a stress measurement of area Ac3 in the glass, between the opening Op3 and the outer perimeter Eg3, below zero. The relatively white area Ac3 close to the bushing Bu3 was turned into the area subject to compressive stress from the area subject to tension, and further, a relatively black area Ar3 between the relatively white areas Ac3 and Ac4, strongly subject to tension without the reinforcement, was in slight tension, closer to compression after reinforcement. From the comparison with the measured levels, the compressive stress was formed in the glass substrate around the bushing Bu3 upon application of the reinforcement. Accordingly, the glass product with reinforcement was made with higher resistance against cracking at an opening than the glass product without reinforcement.

The glass products described above may be manufactured by any suitable means. For example, glass products may be produced by the steps as follows. First, a glazing may be prepared for fabrication of the glass product. The glass product can be made of a glazing in form of a single glass sheet, a laminated glazing, or any other suitable glazing. An opening may be formed by any suitable means, such as drilling or chemical etching the glazing, such that a hole is formed through all or part of the glazing. The opening may be any suitable shape, such as a circle or an oval. A rectangular shaped or any other polygon shaped opening may be used. In some embodiments including a laminated glazing, openings may be formed in one or more glass sheets prior to lamination. In such laminated glazings, the opening may extend through the entire glazing or part of the glazing, where at least one glass sheet does not include an opening.

Where the opening is circular, after formation of the opening in the glazing, a circular bushing having a diameter slightly smaller than the diameter of the opening, is provided within the opening, wherein an adhesive may be provided on the outer circumference of the bushing. In some embodiments, the adhesive may be applied to the edge of the opening or a gap between the outer periphery of the bushing and the inner wall of the opening may be filled with an adhesive. The bushing may be expanded by application of heat or mechanical force. A heat application may be made by applying heat to the inside of the bushing by a heat source such as, e.g., an electrical heater. To uniformly expand the bushing in the circumferential direction, the heat source may be in a cylindrical shape as to uniformly heat the inner peripheral surface of the bushing. In some embodiments, a heat source may surround the entire glass product or apply heat locally to the bushing from a side or sides. Where a mechanical force is used for expanding the diameter of the bushing, a cylindrical device gradually enhancing its diameter may be used. In certain embodiments, a device capable of applying heat and mechanical force at the same time may be useful to expand the bushing. Subsequently, the adhesive may be cured by any suitable means, including heat application where the adhesive is thermosetting. Some adhesives may be cured by mixing components, including a hardening agent. If a UV radiation curable resin is used, the UV radiation curable resin may be cured by ultraviolet radiation.

After the bushing is expanded and the adhesive is cured, the bushing may be reduced in size. Where expansion was achieved by heating, the bushing may contract when the bushing returns to room temperature. Alternatively, where the bushing is expanded by mechanical force, such application of force is removed to reduce the size of the bushing.

Compressive stress may be formed around the opening in the glazing, where the bushing reduces the size thereof, such that the strength of the glass around the opening is strengthened, thereby reducing the risk of cracking.

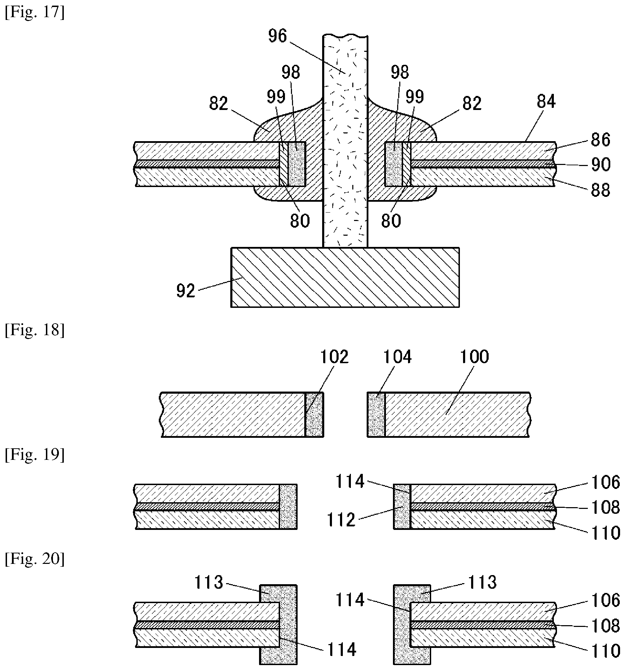

In certain embodiments, a seal may be provided at the opening, for example, to interact with a device extending through the opening. In FIG. 17, a seal 82 is shown around an opening 80. The opening 80 is formed in a glazing 84, which is made of a first glass sheet 86, a second glass sheet 88 facing the first glass sheet 86, and an intermediate layer 90 formed between the first glass sheet 86 and the second glass sheet 88. A bushing 98 may be provided in the opening 80 via an adhesive 99. In some embodiments, the glazing may be a single glass sheet. A wiper mechanism 92 serving as a device for wiping the surface of the glazing 84 is provided so as to extend through the seal 82 by a shaft 96 of the wiper mechanism 92. The seal 82 made of a rubber material in certain embodiments. The seal 82 may further protect the glazing around the opening by preventing damage due to impact or unwanted force.

The seal may be any material, including synthetic or natural rubber or other polymer materials. Where the seal is a rubber it may include vulcanized rubber. The seal may be formed with the bushing, attached to the bushing or otherwise used in an assembly described herein including a bushing. The seal may further be used in an assembly described herein with no bushing.

In a further embodiment, compression may be formed at a glass opening without a bushing. A shrinking material which decreases in size after curing may be placed along the edge of the opening and cured in place along the opening edge. Preferably, the shrinking material may decrease in size as the shrinking material is cured. The shrinking material may include, without limitation, a polyurethane. The shrinking material may remain attached to the glass opening edge after curing and decreasing in size and a compressive stress is formed at the glass opening. The shrinking material is in tension in the cured, decreased size state. A seal may further be used in the opening to form a seal with a mechanism extending through the opening. Preferably the shrinking material adheres to the edge of the glass opening. FIG. 18 illustrates such a shrinking material reinforcing an opening in a glazing.

FIG.18 shows a glazing 100 with an opening 102 extending through the glazing 100. A shrinking material made stress generating member 104 is provided extending through the opening 102 and contacting the edge of the opening 102 to generate a compressive stress at an edge of the opening 102 in the glazing 100. The stress generating member 104 may be made of a resin compound decreasing in size after adhering to the edge of the opening 102 in the glazing 100. With the contraction of the stress generating member 104, the compressive stress may be formed at the edge of the opening 102 to strengthen the glazing 100 at the opening 102. In some embodiments, the glazing 100 may be a single glass sheet or a laminated glazing, as shown in FIG. 19. A single glass sheet may further be used in a laminated glazing, in some further embodiments.

In FIG. 19, a glazing is provided having a first glass sheet 106, a second glass sheet 110 facing the first glass sheet 106, and an intermediate layer 108 formed between the first glass sheet 106 and the second glass sheet 110. An opening 114 is formed as to extend through the glazing, and a stress generating member 112 is provided on an inner wall of the opening 114. The stress generating member 112 is made of a resin compound decreasing in size after adhering to the inner wall of the opening 114 in the glazing. With the contraction of the stress generating member 112, compressive stress is generated in the glazing around the opening 114, which provides strength to the glazing around the opening 114 to strengthen the glazing. Alternatively, in some embodiments, the opening may be formed as to penetrate only the second glass sheet such that the glazing may be suitable for connecting an electronic device such as, e.g., an organic light emitting device or a heatable print or coating, as described above.

FIG. 20 shows a glass product according to an exemplary embodiment of the present disclosure. Particularly, FIG. 20 shows a glazing having an opening 114 extending therethrough. The glazing may include a single glass sheet or a laminated glazing. In some embodiments, the single glass sheet may further be used in a laminated glazing. As shown in FIG. 20, a stress generating member 113 may extend along the edge of the opening 114 and along one or more of the outer glazing surfaces.

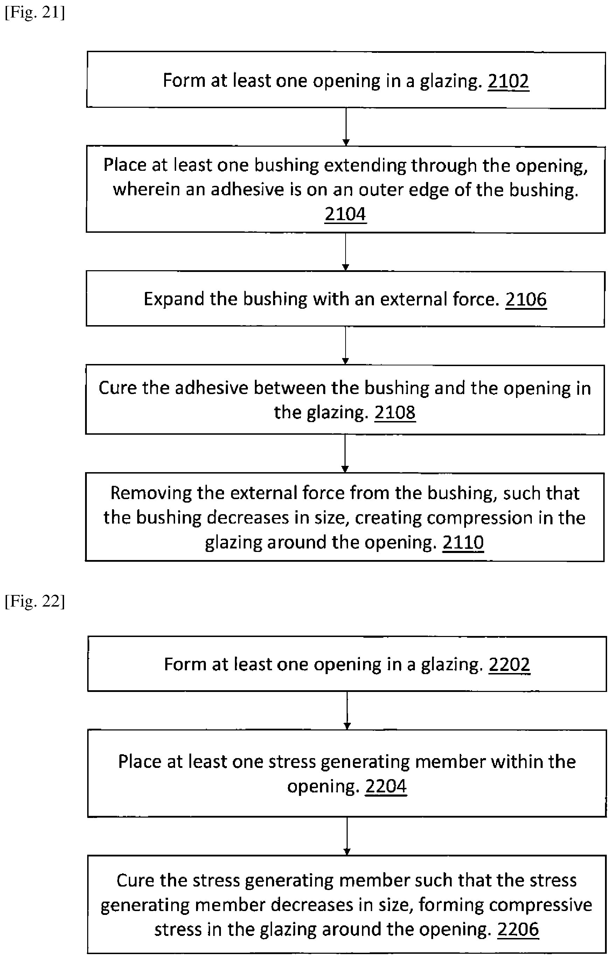

According to aspects of the present disclosure, referring to FIG. 21, a manufacturing process of a glass product having a reinforced opening may comprise the following steps.

Step 2102 includes forming at least one opening in a glazing. The glazing may include a single glass sheet or laminated glass sheets. Where the glazing is laminated glass sheets, the opening may be formed before or after lamination. Step 2104 includes placing at least one bushing extending through the opening, wherein an adhesive is on an outer edge of the bushing. Step 2106 includes expanding the bushing with an external force. The external force may include any suitable means, including heating or mechanical expansion. Step 2108 includes curing the adhesive between the bushing and the opening in the glazing. Step 2110 includes removing the external force from the bushing, such that the bushing decreases in size, creating compression in the glazing around the opening.

According to aspects of the present disclosure, referring to FIG. 22, a manufacturing process of a glass product having a reinforced opening may comprise the following steps.

Step 2202 includes forming at least one opening in a glazing. Step 2204 includes placing at least one stress generating member within the opening. Step 2206 includes curing the stress generating member such that the stress generating member decreases in size, forming compressive stress in the glazing around the opening.

The above description of the disclosure is provided to enable a person skilled in the art to make or use the disclosure. Various modifications to the disclosure will be readily apparent to those skilled in the art, and the common principles defined herein may be applied to other variations without departing from the spirit or scope of the disclosure. Further, the above description in connection with the drawings describes examples and does not represent the only examples that may be implemented or that are within the scope of the claims.

Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise. Thus, the disclosure is not to be limited to the examples and designs described herein but is to be accorded the widest scope consistent with the claims.

## Claims

1. A glass product, comprising:
a glazing (12, 84, 100) having at least one glass sheet (26, 28, 32, 38, 42; 50, 54, 70, 86, 88, 106, 110);
an opening (14, 31, 44, 55, 72, 80, 102, 114) extending through at least part of the glazing (12, 84, 100); and
a stress generating member which extends through the opening (14, 31, 44, 55, 72, 80, 102, 114) and contacting an edge of the opening,
wherein the stress generating member generates compressive stress in the glazing (12, 84, 100) around the opening (14, 31, 44, 55, 72, 80, 102, 114) in the inward radial direction of the opening.

2. The glass product according to claim 1, wherein the stress generating member comprises a resin, wherein the resin decreases in size when the resin is cured.

3. The glass product according to claim 1, wherein the stress generating member comprises a first bushing (16, 36, 46, 56, 74, 98) and an adhesive (18, 34, 48, 57, 99), wherein the adhesive is provided between the edge of the opening (14, 31, 44, 55, 72, 80, 102, 114) and the first bushing.

4. The glass product according to claim 3, wherein the first bushing (16, 36, 46, 56, 74, 98) is subject to tension.

5. The glass product according to claim 3 or 4, wherein the first bushing (16, 36, 46, 56, 74, 98) comprises a metal or a metal alloy.

6. The glass product according to claim 5, wherein the first bushing (16, 36, 46, 56, 74, 98) comprises aluminum or an aluminum containing alloy.

7. The glass product according to any one of claims 3 to 6, wherein the first bushing (16) comprises a flange (22) and a body (24), wherein the flange (22) extends outside of the opening (14) along an outer surface of the glazing (12) and the body (24) of the first bushing (16) extends through the opening (14).

8. The glass product according to any one of claims 3 to 7, further comprising a second bushing.

9. The glass product according to any one of claims 1 to 8, wherein the edge of the opening (14, 31, 44, 55, 72, 80, 102, 114) has a roughness (Ra) of less than 2.5 µm.

10. The glass product according to any one of claims 1 to 9, further comprising a seal (82) provided at the opening (80).

11. The glass product according to claim 10, wherein the seal (82) is attached to the first bushing (98).

12. A method of forming compressive stress at an opening (14, 31, 44, 55, 72, 80) in a glazing (12, 84), comprising:
placing at least one bushing (16, 36, 46, 56, 74, 98) extending through the opening, wherein an adhesive (18, 34, 48, 57, 99) is on an outer edge of the bushing; wherein the at least one bushing has an outer diameter less than an original diameter of the opening;
expanding the outer edge of the bushing (16, 36, 46, 56, 74, 98) at a higher rate than any expansion of the glazing to provide the bushing in an expanded state;
curing the adhesive (18, 34, 48, 57, 99) between the bushing and the opening (14, 31, 44, 55, 72, 80) to bond the bushing to an edge of the opening; and
allowing the bushing (16, 36, 46, 56, 74, 98) to decrease in size from the expanded state, wherein the adhesive (18, 34, 48, 57, 99) remains adhered to the outer edge of the bushing and the edge of the opening (14, 31, 44, 55, 72, 80),
wherein a compressive stress is formed in the glazing (12, 84) around the opening (14, 31, 44, 55, 72, 80) in the inward radial direction of the opening.

13. The method according to claim 12, wherein expanding the outer edge of the bushing (16, 36, 46, 56, 74, 98) comprises heating the bushing, and allowing the bushing to decrease in size from the expanded state comprises allowing the bushing to cool.

14. The method according to claim 12, wherein expanding the outer edge of the bushing (16, 36, 46, 56, 74, 98) comprises applying a mechanical force to the bushing, and allowing the bushing to decrease in size from the expanded state comprises removing the mechanical force from the bushing.

## Patentansprüche

1. Glasprodukt, das Folgendes umfasst:
eine Verglasung (12, 84, 100) mit zumindest einer Glasscheibe (26, 28, 32, 38, 42; 50, 54, 70, 86, 88, 106, 110);
eine Öffnung (14, 31, 44, 55, 72, 80, 102, 114), die sich durch zumindest einen Teil der Verglasung (12, 84, 100) hindurcherstreckt; und
ein Spannungserzeugungselement, das sich durch die Öffnung (14, 31, 44, 55, 72, 80, 102, 114) hindurcherstreckt und eine Kante der Öffnung berührt,
wobei das Spannungserzeugungselement Druckspannung in der Verglasung (12, 84, 100) rund um die Öffnung (14, 31, 44, 55, 72, 80, 102, 114) in radial nach innen gerichteter Richtung der Öffnung erzeugt.

2. Glasprodukt nach Anspruch 1, wobei das Spannungserzeugungselement ein Harz umfasst, wobei sich das Harz in den Abmessungen verkleinert, wenn das Harz gehärtet wird.

3. Glasprodukt nach Anspruch 1, wobei das Spannungserzeugungselement eine erste Buchse (16, 36, 46, 56, 74, 98) und ein Klebemittel (18, 34, 48, 57, 99) umfasst, wobei das Klebemittel zwischen der Kante der Öffnung (14, 31, 44, 55, 72, 80, 102, 114) und der ersten Buchse bereitgestellt ist.

4. Glasprodukt nach Anspruch 3, wobei die erste Buchse (16, 36, 46, 56, 74, 98) einer Spannung ausgesetzt ist.

5. Glasprodukt nach Anspruch 3 oder 4, wobei die erste Buchse (16, 36, 46, 56, 74, 98) ein Metall oder eine Metalllegierung umfasst.

6. Glasprodukt nach Anspruch 5, wobei die erste Buchse (16, 36, 46, 56, 74, 98) Aluminium oder eine Aluminium-enthaltende Legierung umfasst.

7. Glasprodukt nach einem der Ansprüche 3 bis 6, wobei die erste Buchse (16) einen Flansch (22) und einen Körper (24) umfasst, wobei sich der Flansch (22) außerhalb der Öffnung (14) entlang einer Außenfläche der Verglasung (12) erstreckt und sich der Körper (24) der ersten Buchse (16) durch die Öffnung (14) hindurcherstreckt.

8. Glasprodukt nach einem der Ansprüche 3 bis 7, das außerdem eine zweite Buchse umfasst.

9. Glasprodukt nach einem der Ansprüche 1 bis 8, wobei die Kante der Öffnung (14, 31, 44, 55, 72, 80, 102, 114) eine Rauheit (Ra) von weniger als 2,5 µm aufweist.

10. Glasprodukt nach einem der Ansprüche 1 bis 9, das außerdem eine Dichtung (82) umfasst, die an der Öffnung (80) bereitgestellt ist.

11. Glasprodukt nach Anspruch 10, wobei die Dichtung (82) an der ersten Buchse (98) befestigt ist.

12. Verfahren zum Erzeugen von Druckbeanspruchung an einer Öffnung (14, 31, 44, 55, 72, 80) in einer Verglasung (12, 84), das Folgendes umfasst:
das Platzieren von zumindest einer Buchse (16, 36, 46, 56, 74, 98), die sich durch die Öffnung hindurcherstreckt, wobei ein Klebemittel (18, 34, 48, 57, 99) sich auf einer Außenkante der Buchse befindet; wobei die zumindest eine Buchse einen Außendurchmesser aufweist, der geringer ist als ein ursprünglicher Durchmesser der Öffnung;
das Ausdehnen der Außenkante der Buchse (16, 36, 46, 56, 74, 98) mit einer größeren Geschwindigkeit als das Ausdehnen der Verglasung, um die Buchse in einem ausgedehnten Zustand bereitzustellen;
das Härten des Klebemittels (18, 34, 48, 57, 99) zwischen der Buchse und der Öffnung (14, 31, 44, 55, 72, 80), um die Buchse mit einer Kante der Öffnung haftschlüssig zu verbinden; und
das Zulassen, dass die Buchse (16, 36, 46, 56, 74, 98) aus dem ausgedehnten Zustand sich in den Abmessungen verkleinert, wobei das Klebemittel (18, 34, 48, 57, 99) an der Außenkante der Buchse und der Kante der Öffnung (14, 31, 44, 55, 72, 80) kleben bleibt,
wobei eine Druckbeanspruchung in der Verglasung (12, 84) rund um die Öffnung (14, 31, 44, 55, 72, 80) in radial nach innen gerichteter Richtung der Öffnung erzeugt wird.

13. Verfahren nach Anspruch 12, wobei das Ausdehnen der Außenkante der Buchse (16, 36, 46, 56, 74, 98) das Erwärmen der Buchse umfasst und das Zulassen, dass die Buchse aus dem ausgedehnten Zustand sich in den Abmessungen verkleinert, das Zulassen, dass die Buchse abkühlt, umfasst.

14. Verfahren nach Anspruch 12, wobei das Ausdehnen der Außenkante der Buchse (16, 36, 46, 56, 74, 98) das Anlegen einer mechanischen Kraft auf die Buchse umfasst und das Zulassen, dass die Buchse aus dem ausgedehnten Zustand sich in den Abmessungen verkleinert, das Entfernen der mechanischen Kraft von der Buchse umfasst.

## Revendications

1. Produit en verre, comprenant :
un vitrage (12, 84, 100) présentant au moins une feuille de verre (26, 28, 32, 38, 42 ; 50, 54, 70, 86, 88, 106, 110) ;
une ouverture (14, 31, 44, 55, 72, 80, 102, 114) s'étendant à travers au moins une partie du vitrage (12, 84, 100) ; et
un élément générateur de contrainte qui s'étend à travers l'ouverture (14, 31, 44, 55, 72, 80, 102, 114) et venant en contact avec un bord de l'ouverture,
dans lequel l'élément générateur de contrainte génère une contrainte de compression dans le vitrage (12, 84, 100) autour de l'ouverture (14, 31, 44, 55, 72, 80, 102, 114) dans la direction radiale vers l'intérieur de l'ouverture.

2. Produit en verre selon la revendication 1, dans lequel l'élément générateur de contrainte comprend une résine, dans lequel la résine diminue en taille lorsque la résine est durcie.

3. Produit en verre selon la revendication 1, dans lequel l'élément générateur de contrainte comprend une première douille (16, 36, 46, 56, 74, 98) et un adhésif (18, 34, 48, 57, 99), dans lequel l'adhésif est prévu entre le bord de l'ouverture (14, 31, 44, 55, 72, 80, 102, 114) et la première douille.

4. Produit en verre selon la revendication 3, dans lequel la première douille (16, 36, 46, 56, 74, 98) est soumise à une tension.

5. Produit en verre selon la revendication 3 ou 4, dans lequel la première douille (16, 36, 46, 56, 74, 98) comprend un métal ou un alliage métallique.

6. Produit en verre selon la revendication 5, dans lequel la première douille (16, 36, 46, 56, 74, 98) comprend de l'aluminium ou un alliage contenant de l'aluminium.

7. Produit en verre selon l'une quelconque des revendications 3 à 6, dans lequel la première douille (16) comprend une bride (22) et un corps (24), dans lequel la bride (22) s'étend à l'extérieur de l'ouverture (14) le long d'une surface extérieure du vitrage (12) et le corps (24) de la première douille (16) s'étend à travers l'ouverture (14).

8. Produit en verre selon l'une quelconque des revendications 3 à 7, comprenant en outre une seconde douille.

9. Produit en verre selon l'une quelconque des revendications 1 à 8, dans lequel le bord de l'ouverture (14, 31, 44, 55, 72, 80, 102, 114) présente une rugosité (Ra) inférieure à 2,5 µm.

10. Produit en verre selon l'une quelconque des revendications 1 à 9, comprenant en outre un joint d'étanchéité (82) prévu au niveau de l'ouverture (80).

11. Produit en verre selon la revendication 10, dans lequel le joint d'étanchéité (82) est fixé à la première douille (98).

12. Procédé de formation d'une contrainte de compression au niveau d'une ouverture (14, 31, 44, 55, 72, 80) dans un vitrage (12, 84), comprenant les étapes consistant à :
placer au moins une douille (16, 36, 46, 56, 74, 98) s'étendant à travers l'ouverture, dans lequel un adhésif (18, 34, 48, 57, 99) est sur un bord extérieur de la douille ; dans lequel la au moins une douille présente un diamètre extérieur inférieur à un diamètre d'origine de l'ouverture ;
dilater le bord extérieur de la douille (16, 36, 46, 56, 74, 98) à un débit supérieur à une quelconque dilatation du vitrage pour fournir la douille dans un état dilaté ;
durcir l'adhésif (18, 34, 48, 57, 99) entre la douille et l'ouverture (14, 31, 44, 55, 72, 80) pour lier la douille à un bord de l'ouverture ; et
permettre à la douille (16, 36, 46, 56, 74, 98) de diminuer en taille à partir de l'état dilaté, dans lequel l'adhésif (18, 34, 48, 57, 99) reste mis en adhérence au niveau du bord extérieur de la douille et au niveau du bord de l'ouverture (14, 31, 44, 55, 72, 80),
dans lequel une contrainte de compression est formée dans le vitrage (12, 84) autour de l'ouverture (14, 31, 44, 55, 72, 80) dans la direction radiale vers l'intérieur de l'ouverture.

13. Procédé selon la revendication 12, dans lequel la dilatation du bord extérieur de la douille (16, 36, 46, 56, 74, 98) comprend le chauffage de la douille, et le fait de permettre à la douille de diminuer en taille à partir de l'état dilaté comprend le fait de permettre à la douille de refroidir.

14. Procédé selon la revendication 12, dans lequel la dilatation du bord extérieur de la douille (16, 36, 46, 56, 74, 98) comprend l'application d'une force mécanique à la douille, et le fait de permettre à la douille de diminuer en taille à partir de l'état dilaté comprend l'élimination de la force mécanique à partir de la douille.
